(19) Europäisches Patentamt
European Patent Office
Office européen des brevets

(11) Veröffentlichungsnummer : **0 068 089 B2**

(12) **NEUE EUROPÄISCHE PATENTSCHRIFT**

(45) Veröffentlichungstag der neuen Patentschrift : **15.04.92 Patentblatt 92/16**

(21) Anmeldenummer : **82103155.6**

(22) Anmeldetag : **15.04.82**

(51) Int. Cl.$^5$ : **C07C 213/04,** C07C 215/40, C07C 217/08, C08G 59/18, C07C 229/04, C07D 453/02, D06M 13/46, A01N 33/12

# (54) Verfahren zur Herstellung von quartären Ammoniumverbindungen.

(30) Priorität : **23.04.81 DE 3116087**

(43) Veröffentlichungstag der Anmeldung : **05.01.83 Patentblatt 83/01**

(45) Bekanntmachung des Hinweises auf die Patenterteilung : **30.12.86 Patentblatt 86/52**

(45) Bekanntmachung des Hinweises auf die Entscheidung über den Einspruch : **15.04.92 Patentblatt 92/16**

(84) Benannte Vertragsstaaten : **AT BE CH DE FR GB IT LI LU NL SE**

(56) Entgegenhaltungen :
**DE-A- 1 619 081**
**DE-A- 2 424 269**
**FR-A- 999 703**
**GB-A- 2 067 196**
**US-A- 2 897 170**

(73) Patentinhaber : **Henkel Kommanditgesellschaft auf Aktien**
**Postfach 1100 Henkelstrasse 67**
**W-4000 Düsseldorf-Holthausen (DE)**
Patentinhaber : **Degussa Aktiengesellschaft**
**Weissfrauenstrasse 9**
**W-6000 Frankfurt am Main 1 (DE)**

(72) Erfinder : **Rutzen, Horst, Dr.**
**Falkenweg 12**
**W-4018 Langenfeld (DE)**
Erfinder : **Nikolaus, Peter, Dr.**
**Mettmanner Strasse 124**
**W-4010 Hilden (DE)**
Erfinder : **Bischoff, Martin, Dr.**
**Schlüterstrasse 6**
**W-4650 Gelsenkirchen (DE)**
Erfinder : **Lehmann, Rudolf, Dr.**
**Fröbelstrasse 4a**
**W-4040 Neuss (DE)**

EP 0 068 089 B2

## Beschreibung

Zur Herstellung von quartären Ammoniumverbindungen geht man meist von einem tertiären Amin aus, das zur Quartärstufe alkyliert wird. Als Alkylierungsmittel läßt man dabei üblicherweise Ester starker Mineralsäuren, insbesondere Alkylhalogenide, Schwefel- oder Sulfonsäureester auf tertiäre Amine einwirken; gelegentlich werden auch andere Ester benutzt. Eine weitere bekannte Möglichkeit zur Alkylierung tertiärer Amine stellt die Reaktion von Alkylenoxiden mit tertiären Aminen in Gegenwart von Wasser dar. Darüber hinaus gibt es noch eine Reihe anderer Möglichkeiten zur Herstellung von quartären Ammoniumverbindungen aus den leicht zugänglichen tertiären Aminen (vgl. Goerdeler in Houben-Weyl, Methoden oder organischen Chemie, 4. Auflage, Band 11/2, Seite 592 ff.). Quartäre Ammoniumverbindungen mit einem oder mehreren langen aliphatischen Resten oder einem langen aliphatischen und einem aromatischen Rest weisen antimikrobielle beziehungsweise textilweichmachende und antistatischmachende Eigenschaften auf und finden breite Anwendung. Man erhält derartige Verbindungen, indem man entweder tertiäre Amine mit langen aliphatischen Resten und/oder aromatischen Resten alkyliert oder die Alkylierung mit Alkylierungsmitteln vornimmt, die ihrerseits lange aliphatische oder aromatische Reste enthalten, wobei natürlich auch sowohl im tertiären Amin als auch im Alkylierungsmittel lange aliphatische oder aromatische Reste vorhanden sein können. Ein Nachteil der Verfahren zur Herstellung der quarätren Ammoniumverbindungen ist, daß häufig unter Druck gearbeitet werden muß, gelegentlich Lösungsmittel erforderlich sind, die Ausbeute meist unbefriedigend ist und häufig mit einem Überschuß an einem der Reaktionsteilnehmer und/oder bei hohen Temperaturen gearbeitet werden muß. So werden in der deutschen Patentanmeldung DE-A 16 19 081 Behandlungsmittel für Textilien beschrieben, deren Wirkstoffe man durch Umsetzen von Epoxiden mit einem 5-fachen Überschuß an Trimethylamine oder durch Reaktion bei 150 bis 250 °C erhält. Überschüssiges Amin wird nach Ende der Umsetzung durch Destillation wieder entfernt.

Aufgabe der vorliegenden Erfindung ist daher ein Verfahren zur Herstellung von quartären Ammoniumverbindungen durch Umsetzen von Epoxidverbindungen mit einem tertiären Amin, bei dem die geschilderten Nachteile der Verfahren des Standes der Technik vermieden werden.

Die Aufgabe wird erfindungsgemäß durch ein Verfahren gelöst, das dadurch gekennzeichnet ist, daß man die Epoxidverbindungen mit dem Salz eines tertiären Amins in Gegenwart von quartären Ammoniumverbindungen als Katalysator umsetzt und wobei man als Epoxidverbindung entweder ein Epoxyalkan der allgemeinen Formel I

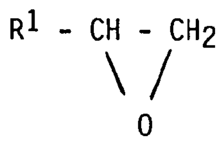

(I)

in der $R^1$ eine lineare oder verzweigte aliphatische Kohlenwasserstoffgruppe mit 4 bis 21 Kohlenstoffatomen oder eine Gruppe der allgemeinen Formel II

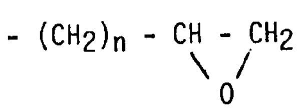

(II)

mit n = 4 bis 16 bedeutet, oder einen Glycidether der allgemeinen Formel III

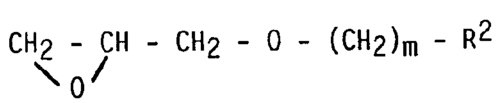

(III)

in der m einen Wert von 1 bis 10 und $R^2$ Wasserstoff oder eine aliphatische Kohlenwasserstoffgruppe mit 1 bis 24 Kohlenstoffatomen oder eine Gruppe der allgemeinen Formel IV

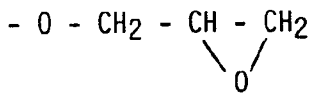

(IV)

bedeutet, einsetzt.

Das Salz wird zur Umsetzung mit der Epoxidverbindung vorzugsweise in Wasser gelöst eingesetzt. Man kann dabei das entsprechende Salz in einer ausreichenden Menge Wasser auflösen oder die Bildung des Salzes vornehmen, indem man zu dem in Wasser gelösten Amin eine äquivalente Menge Säure hinzufügt und dann die so gebildete Aminsalzlösung mit der Epoxidverbindung in Gegenwart von quartären Ammoniumverbindungen als Katalysator umsetzt.

Als eine günstige Reaktionstemperatur hat sich 40-100 °C erwiesen, wobei eine Temperatur zwischen 80 und 95 °C sich als besonders günstig herausgestellt hat.

Die Menge des einzusetzenden Katalysators beträgt etwa 0,5 bis 10 Gew.-%, bezogen auf das Endprodukt. Die optimale Menge ist den jeweiligen Reaktionspartnern anzupassen; dies kann durch orientierende Versuche leicht erfolgen.

Es hat sich als zweckmäßig herausgestellt, daß man 1 Epoxydäquivalent mit einem, vorzugsweise mit 1,1 Aminäquivalent umsetzt.

Von den als Ausgangsstoffe einzusetzenden Epoxidverbindungen sind 1,2-Epoxyalkane bevorzugt. Dieser werden in bekannter Weise aus den entsprechenden 1,2-Monoolefinen beziehungsweise Olefin-Gemischen erhalten, die beispielsweise durch Polymerisation von Ethylen mit organischen Aluminiumverbindungen als Katalysatoren oder durch thermisches Cracken von Paraffinkohlenwasserstoffen erhalten werden. Beispiele für bevorzugte Epoxyalkane sind die Verbindungen 1,2-Epoxyhexan, 1,2-Epoxyoctan, ,1,2-Epoxydecan, 1,2-Epoxydodecan, 1,2-Epoxytetradecan, 1,2-Epoxyhexadecan, 1,2-Epoxyoctadecan. Ebenfalls geeignet sind Epoxidgemische, wie zum Beispiel $C_{12/14}$-1,2-Epoxid mit zirka 70 Gew.-% $C_{12}$ und zirka 30 Gew.-% $C_{14}$-Epoxyalkan oder $C_{16/18}$-1,2-Epoxid mit zirka 40 Gew.-% $C_{16}$ und zirka 60 Gew.-% $C_{18}$-Epoxyalkan.

Weiterhin bevorzugt sind Di-Epoxyalkane mit 8 bis 20 Kohlenstoffatomen und zwei endständigen Epoxygruppen wie beispielsweise 1,2-7,8-Diepoxyoctan, 1,2-9,10-Diepoxydecan und ähnliche Verbindungen. Auch Mono- oder Di-Glycidether wie Hexadecylmonoglycidether und 1,4-Butandioldiglycidether sind bevorzugte Epoxidverbindungen mit endständigen Epoxidgruppen.

Geeignete tertiäre Amine sind inbesondere stärker basische Amine wie zum Beispiel Trimethylamin, Dimethylbenzylamin, Triethylamin, Dimethylethanolamin, Dimethylpropanolamin, N-β-hydroxydecyl-N-hydroxyethyl-N-methylamin, N-β-hydroxyhexadecyl-N-β-hydroxyethyl-N-methylamin, Methyldiethanolamin, Dimethylaminopropandiol, tertiäre Diamine wie zum Beispiel Tetramethylethylendiamin oder Tetramethylpropylendiamin-1,3 oder cyclische Amine wie Pyridin, Picolin, Pepicolin, N-Methylpiperidin, N-Methylpyriolidin, Chinuclidin.

Als Säurekomponente des Aminsalzes sind anorganische Säuren wie beispielsweise Salzsäure, Schwefelsäure, Salpetersäure, Phosphorsäure, Brom-, Jod- oder Fluorwasserstoff, Borsäure, Kohlensäure oder saure Salze, wie zum Beispiel Natriumhydrogensulfat oder Natriumhydrogenphosphat geeignet. Ferner kann die Säurekomponente auch eine oder mehrere organische Säuren sein, wie etwa Ameisensäure, Essigsäure, Bernsteinsäure, Benzoesäure oder auch Phosphonsäure, Phosphinsäure, Toluolsulfonsäure, Amidosulfonsäure oder Alkylschwefelsäure. Amphotere Verbindungen, wie zum Beispiel Dimethylaminoessigsäure kommen ebenfalls in Frage.

Für die Durchführung des erfindungsgemäßen Verfahrens geeignete Aminsalze sind beispielsweise das Hydrochlorid beziehungsweise das Hydrojodid von Trimethylamin, das Hydrochlorid beziehungsweise das Hydrofluorid von Dimethylethanolamin, das Hydrochlorid und das Orthoborat von N,N-Dimethyl-1-aminopropandiol-2,3, das Hydrochlorid von N-β-Hydroxydecyl-N-β-hydroxyethyl-N-methylamin, das Hydrochlorid von N-β-Hydroxyhexadecyl-N-β-hydroxyethyl-N-methylamin, das Hydrochlorid und das Formiat von Tetramethylpropylendiamin-1,3.

Für das erfindungsgemäße Verfahren geeignete Katalysatoren sind die als Phasentransfer-Katalysatoren bekannten quartären Ammoniumsalze, beispielsweise Tetramethylammoniumchlorid, Methyltrioctylammoniumchlorid, Tetrabutylammoniumhydrogensulfat, im Handel erhältliche, typische Textilweichmacher wie Dimethylditalgalkylammoniumchlorid, Dimethyldistearylammoniumchlorid, ("Präpagen WK", Hoechst). Diese beiden zuletzt genannten Verbindungen werden dabei bevorzugt. Auch die Reaktionsprodukte selbst des erfindungsgemäßen Verfahrens sind meist ausgezeichnete Katalysatoren. Man kann daher bei mehreren hintereinander durchzuführenden Reaktionsansätzen erfindungsgemäß hergestellte Umsetzungsprodukte eines früheren Ansatzes als Katalysator für nachfolgende Ansätze verwenden. Bei diesem Verfahren braucht der Katalysator nicht vom Endprodukt abgetrennt zu werden, da ja Katalysator und Reaktionsprodukt gleich sind

und im Katalysator wie im Reaktionsprodukt keine fremden quartären Ammoniumverbindungen enthalten sind. Eine derartige Verfahrensweise wird daher bevorzugt. Aber auch in anderen Fällen, in denen Katalysator und Endprodukt nicht identisch sind, stört der Katalysator naturgemäß meist nicht, was ein besonderer Vorteil des erfindungsgemäßen Verfahrens ist. Weiterhin kommen als Katalysatoren polyquartäre Verbindungen, die man zum Beispiel durch Umsetzen von ditertiären Aminen mit Diepoxiden erhält, sowie quartäre Ammoniumverbindungen auf einer polymeren Matrix, wie zum Beispiel der als Ionenaustauscher bekannte Lewatit MB 5080 (Fa. Bayer) in Frage.

Bei einer besonders bevorzugten Ausführungsform des erfindungsgemäßen Verfahrens setzt man ein Epoxyalkan der allgemeinen Formel I, in der $R^1$ eine aliphatische Kohlenwasserstoffgruppe mit 4 bis 16 Kohlenstoffatomen bedeutet, mit dem Salz eines tertiären Amins und einer starken Säure in Gegenwart von Dimethyldi- ($C_{12}$- bis $C_{16}$-Alkyl- oder Alkenyl-) Ammoniumchlorid als Katalysator um.

Das erfindungsgemäße Verfahren zeichnet sich gegenüber den Verfahren des Standes der Technik dadurch aus, daß es bei vergleichsweise geringem Materialumsatz ohne Anwendung von Überdruck bei relativ niedrigen Reaktionstemperaturen und kürzeren Reaktionszeiten durchgeführt wird und Endprodukte in hoher Reinheit mit großen Ausbeuten liefert.

Erfindungsgemäß hergestellte Reaktionsprodukte mit nur einem langkettigen oder aromatischen Rest oder zwei Resten mit weniger als etwa 14 Kohlenstoffatomen und im übrigen kurzkettigen Resten weisen antimikrobielle Eigenschaften auf, während mit zunehmender Anzahl und Kettenlänge von langkettigen Resten die Reaktionsprodukte textilweich- und antistatischmachende Eigenschaften aufweisen. Je nach chemischer Konstitution der Verbindungen sind die antimikrobiellen beziehungsweise textilpflegenden Eigenschaften unterschiedlich stark ausgeprägt, wobei gleitende Übergänge zu beobachten sind.

Eine Verwendung als Textilweichmacher erfolgt beispielsweise in flüssigen Mitteln zur Wäschenachbehandlung, die neben dem erfindungsgemäß hergestellten Wirkstoff zusätzlich wenigstens eine weitere Verbindung aus der Gruppe Trägermittel, Lösungsmittel, Verdünnungsmittel, Emulgator, Farbstoff, Duftstoff, Konservierungsmittel, Viskositätsstellmittel, Trübungsmittel und eventuell weitere übliche Zusatzstoffe enthalten.

Mittel zur Wäschenachbehandlung haben beispielsweise folgende Zusammensetzung:

| | |
|---|---|
| 2-80 Gew.-% | erfindungsgemäß hergestellte Verbindungen |
| 20-98 Gew.-% | Träger, Lösungsmittel, Verdünnungsmittel |
| 0-20 Gew.-% | Emulgator |
| 0- 3 Gew.-% | Konservierungsmittel |
| 0- 5 Gew.-% | Duftstoff |
| 0- 1 Gew.-% | Farbstoff |

Rest Viskostitätsstellmittel, Trübungsmittel gegebenenfalls saure Verbindungen und sonstige übliche Zusatzstoffe.

Auch wenn man die Verfahrensprodukte zu entsprechend zusammengesetzten Waschmitteln, die wenigstens eine waschaktive Verbindung enthalten, hinzufügt, können sie eine weichmachende Wirkung entfalten. Derartige Waschmittel basieren vorzugsweise auf Rezepturen mit nichtionischen Tensiden.

Trägt man die Verfahrensprodukte, gegebenenfalls zusammen mit üblichen Hilfs- und Zusatzstoffen auf textile Flächengebilde als Träger auf, können diese auch als Tumblerhilfsmittel Verwendung finden.

Beispiele

Beispiel 1

Dieses Beispiel beschreibt die erfindungsgemäße Herstellung von 2-Hydroxyhexadecyl-trimethylammoniumchlorid. Die %-Angaben bedeuten Gewichtsprozent.

In einem 2 1-Dreihalskolben wurden 148,8 g (1,1 Mol) 43,7%ige wäßrige Trimethylaminlösung, verdünnt mit 891 g Wasser unter Rühren und äußerer Kühlung mit kaltem Wasser tropfenweise mit 98,6 g (1,0 Mol) 37 %iger Salzsäure unter Salzbildung versetzt. Hierzu gab man 247,6 g (1,0 Mol) destilliertes technisches 1,2-Epoxyhexadesan (Epoxidzahl 6,46) und 7,0 g 75 %iges Dimethyldistearylammoniumchlorid (10 % Wasser, 15 % Isopropylalkohol). Dann wurde unter Rühren 5 Stunden lang auf 80 °C erhitzt. Der pH-Wert des Reaktionsansatzes lag nach 5 Stunden bei 12,2. Nach 1,5 Stunden Reaktionszeit lag eine klare Lösung vor.

300 g des Reaktionsansatzes wurden anch Zugabe von 200 ml Toluol und 200 ml Cyclohexan im Wasserbad am Wasserabscheider entwässert, anschließend wurde das Lösungsmittel im Wasserstrahlvakuum abdestilliert. Der feste Rückstand (74,4 g) wurde aus 75 g Butanol/Wasser-Gemisch (6 % Wasser) umkristallisiert. Die Ausbeute betrug 71,0 g entsprechend 98,1 % der Theorie. Der Schmelzpunkt des gereinigten Produkts betrug 225-226 °C. Die Analyse ergab folgende Daten :

| | OH-Zahl | % N | % Cl |
|---|---|---|---|
| gefunden | 167,7 | 4,17 | 10,50 |
| berechnet | 166,9 | 4,17 | 10,55 |

Unter sonst gleichen Bedingungen findet ohne Zusatz von Dimethyldistearylammoniumchlorid praktisch kein Umsatz statt.

Beispiel 2

Dieses Beispiel beschreibt die Herstellung von 2-Hydroxyhexyl-trimethylammoniumchlorid.

Analog wie in Beispiel 1 wurden 148,4 g (1,1 Mol) 43,7 %-ige wäßrige Trimethylaminlösung, verdünnt mit 768 g Wasser, mit 224,4 g (1,0 Mol) 57 %iger wäßriger Jodwasserstoffsäure versetzt. Der pH-Wert betrug 8,2. Nach Zugabe von 103,9 (1,0 Mol) destilliertem, technischem 1,2-Epoxihyxan (Epoxidzahl wurde 5 Stunden bei 80 °C gerührt. Nach 10 Minuten lag eine klare Lösung vor. Nach 5 Stunden betrug der pH-Wert 10,4.

300 g des Reaktionsansatzes wurde analog Beispiel 1 entwässert. Der Rohrückstand wog 74,6 g. Er wurde in Butanon gelöst und mit Essigsäureethylester gefällt. Die Ausbeute betrug 95,9 % der Theorie. Das gereinigte Produkt hatte den in der Literatur für dieses Produkt angegebenen Schmelzpunkt von 90-92 °C.

Analysendaten :

| | OH-Zahl | % C | % H | % N | % O |
|---|---|---|---|---|---|
| gefunden | 192,9 | 37,3 | 7,72 | 4,64 | 5,72 |
| berechnet | 195,4 | 37,6 | 7,72 | 4,88 | 5,57 |

Beispiel 3

Dieses Beispiel beschreibt die Herstellung von 2-Hydroxyhexadecyl-2-hydroxyethyldimethylammoniumchlorid.

Wie in den vorangegangenen Beispielen beschrieben, wurde das erfindungsgemäße Verfahren durchgeführt. Der Reaktionsansatz bestand aus folgenden Komponenten:

49,0 g (0,55 Mol) Dimethylethanolamin
49,3 g (0,5 Mol) 37 %ige Salzsäure
498,6 g Wasser
132,0 g (0,5 Mol) technisches 1,2-Epoxyhexadecan (Epoxidzahl 6,06)
3,5 g 75 %iges Dimethyldistearylammoniumchlorid (10 % Wasser, 15 % Isopropylalkohol)

Die Umsetzung erfolgte 6 Stunden bei 95 °C. Entwässert wurde mit Toluol/Cyclohexan/Isopropylalkohol. Nach Umkristallisieren aus Butanon (Schmelzpunkt 225 °C unter Zersetzung) betrug die Ausbeute 92,5 % der Theorie.

Beispiel 4

Wiederholt man Beispiel 1 mit folgendem Reaktionsansatz (a) :

74,4 g (0,55 Mol) 43,7 %ige Trimethylaminlösung
47,9 g (0,5 Mol) 37 %ige Salzsäure
456,3 g Wasser
127,0 g (0,5 Mol) technisches 1,2-Epoxyhexadecan
3,7 g 75 %iges Dimethyldistearylammoniumchlorid

und verwendet von dem auf pH 7 mit verdünnter Salzsäure eingestellten Reaktionsgemisch 14 g als Katalysator für einen weiteren gleichartigen Ansatz (b) erhält man ein hinsichtlich Reaktionsverlauf und Ausbeute mit Beispiel 1 vergleichbares Ergebnis. Verfährt man wie zuvor beschrieben, indem man für einen weiteren gleichartigen Ansatz (c) 14 g des Reaktionsproduktes von Ansatz (b) als Katalysator verwendet, erhält man wiederum ein vergleichbares Resultat.

Beispiel 5

Analog den vorangegangenen Beispielen wurden 66 g (0,55 Mol) N,N-Dimethyl-1-aminopropandiol-2,3 mit 154,3 g Wasser verdünnt und unter Kühlung mit 49,3 g (0,5 Mol) 37 %iger Salzsäure versetzt (pH 9,2). Dann gab man 123,8 g (0,5 Mol) destilliertes 1,2-Epoxyhexadecan und 3,5 g 75 %iges Dimethyldistearylammoniumchlorid zu und erhitzte unter Rühren 3,5 Stunden auf 95 °C. Man erhielt eine klare Lösung, die gegenüber einer Reihe von Testkeimen (zum Beispiel Pseudomonas aerug., Staph. aureus, E. coli) mikrobistatisch beziehungsweise mikrobizid wirksam war.

Beispiel 6

127,3 g (0,55 Mol) N-β-Hydroxydecyl-N-β-hydroxyethyl-N-methylamin und 160,1 g Wasser wurden unter Kühlung und Rühren mit 49,3 g (0,5 Mol) 37 %iger Salzsäure versetzt (pH 8,0). Hiermit wurden 80,5 g (0,5 Mol) technisches 1,2-Epoxydecan (Epoxidzahl 9,93) unter Zugabe von 7 g 75 %igem Dimethyldistearylammoniumchlorid bei 95 °C umgesetzt. Man erhielt eine nahezu homogene Lösung, die gute antimikrobielle Wirkung aufwies.

Beispiel 7

157,8 g (0,5 Mol) N-β-Hydroxyhexadecyl-N-β-hydroxyethyl-N-methylamin und 173,0 g Wasser wurden mit 49,3 g (0,5 Mol) 37 %iger Salzsäure versetzt. Nach Zugabe von 65,95 g (0,25 Mol) technischem 1,4-Butandioldiglycidether (Epoxidzahl 12, 13, Emser-Werke) und 7 g 75 %igem Dimethyldistearylammoniumchlorid wurde auf 95 °C erhitzt, wobei man eine klare Lösung erhielt, die 5 Stunden nachgerührt wurde.

Die Aufarbeitung der Reaktionsprodukte kann wie in Beispiel 1 beschrieben erfolgen.

Beispiel 8

Dieses Beispiel beschreibt die Herstellung eines quartären Ammoniumborats.

Ein Gemisch aus 180 g Wasser und 60 g (0,55 Mol) N,N-Dimethyl-1-aminopropandiol-2,3-wurde portionsweise mit 31 g (0,5 Mol) Orthoborsäure versetzt. Die Lösung wies einen pH-Wert von 10,6 auf. Hierzu wurden 7 g 75%iges Dimethyldistearylammoniumchlorid und 98,7 g (0,5 Mol) destilliertes 1,2-Epoxydodecan zugegeben und 21 Stunden bei 95 °C gerührt. Die klare Lösung wies eine Epoxidzahl von 0,45 auf und war mit Wasser ohne Trübung weiter verdünnbar. Die Wasserabscheidung erfolgte wie in Beispiel 3. Nach Eindampfen im Vakuum und Umkristallisieren aus Aceton/Isopropylalkohol erhielt man 40,5 g einer Substanz, die bei 155-158 °C unter Zersetzung schmolz.

Beispiel 9

Dieses Beispiel beschreibt die Herstellung eines Betains.

Eine Lösung von 24,4 g (0,236 Mol) Dimethylaminoessigsäure in 61,4 g Wasser wurde mit 3,3 g 75 %igem Dimethyldistearylammoniumchlorid und 46,6 g (0,236 Mol) destilliertem 1,2-Epoxydodecan versetzt. Nach 5,5 Stunden Rühren bei 95°C erhielt man eine viskose Lösung, die mit 135,6 g weiter verdünnt und weitere 6 Stunden auf 95 °C erhitzt wurde. Diese Lösung (pH 7,2) wies eine Epoxidzahl von 0,12 und eine Säurezahl von 14,5 auf. Aus 100 g dieser Lösung erhielt man nach Entwässern wie in Beispiel 3 und Umkristallisieren aus Butanon mit 3 % Wasser 25,6 g Festsubstanz mit einem Schmelzpunkt von 157-180 °C.

Beispiel 10

Dieses Beispiel beschreibt die Herstellung einer polymeren Quartärverbindung.

In ein Gemisch aus 71,6 g (0,55 Mol) Tetramethylpropylendiamin-1,3 und 430,8 g Wasser wurden unter Kühlung 98,6 g (1,0 Mol) 37%ige Salzsäure untergerührt. Nach Zugabe von 3,5 g 75%igem Dimethyldistearylammoniumchlorid und 65,95 g (0,5 Mol) 1,4-Butandiol-diglycidether (Epoxidzahl 12, 13 ; Firma Emser Werke) rührte man die Mischung 6 Stunden bei 95 °C. Das Reaktionsgemisch wies eine Epoxidzahl von 0,14 und eine Säurezahl von 47,5 auf. Eine geringe Menge polymerisierten Glycidethers filtrierte man ab. 300 g der filtrierten Lösung wurden wie in Beispiel 3 entwässert. Man erhielt 75 g einer harten gelben, etwas hygroskopischen Substanz.

Beispiel 11

Dieses Beispiel beschreibt die Verwendung eines kationischen Ionenaustauschers als Katalysator.

506,9 g Wasser und 49,0 g (0,55 Mol) Dimethylethanolamin wurden unter Kühlen mit 49,3 g (0,5 Mol) 37 %iger Salzsäure versetzt (pH 8,0). Nach Zugabe von 123,4 g (0,5 Mol) 1,2-Epoxyhexadecan (Epoxidzahl 6,48) und 3,5 g Lewatit MP 5080 (Firma Merck) wurde 16 Stunden lang bei 95 °C gerührt. Die Epoxidzahl betrug 0,0 und die Säurezahl 1,4.

Beispiel 12

Dieses Beispiel beschreibt die Herstellung einer bisquartären Verbindung, die textilweichmachende Eigenschaften hat.

Zu einer Lösung von 35.8 g (0,275 Mol) Tetramethylenpropylendiamin-1,3 in 28,8 g Wasser wurden unter Kühlen 28,8 g (0,25 Mol) 85 %ige Orthophosphorsäure gegeben. Hierzu gab man unter Rühren 145,7 g (0,5 Mol) technisches 1,2-Epoxyoctadecan (Epoxidzahl 5,49) und 3,5 g 75 %iges Dimethyldistearylammoniumchlorid. Nach 4,5 Stunden Reaktionsdauer bei 95°C war die Epoxidzahl auf 0 zurückgegangen. Nach Zugabe von 78,7 g Ethanol trat beim Abkühlen eine Kristallisation des Reaktionsproduktes ein.

Beispiel 13

In gleicher Weise wie in Beispiel 12 wurde eine bisquartäre Verbindung aus 35,8 g (0,275 Mol) Tetramethylenpropylendiamin-1,3 29,2 g Wasser, 23,0 g (0,5 Mol) Ameisensäure, 123,8 g (0,5 Mol) destilliertes 1,2 Epoxyhexadecan (Epoxidzahl 6,48) und 3,5 g 75 %iges Dimethyldistearlammoniumchlorid hergestellt. Nach 5 Stunden bei 95 °C war die Epoxidzahl auf 0,13 zurückgegangen.

Auch diese Verbindung zeigte ausgeprägte textilweichmachende Wirkung.

Beispiel 14

Dieses Beispiel beschreibt die erfindungsgemäße Herstellung einer quartären Ammoniumverbindung unter Einsatz eines Monoglycidethers.

74,4 g (0,55 Mol) 43,7 %ige wäßrige Trimethylaminlösung werden unter Kühlen mit Eiswasser mit 49,3 (0,5 Mol) 37 %iger Salpetersäure versetzt. Hierzu gab man 178,5 g (0,5 Mol) Hexadecylglycidether (Epoxidzahl 4,47) und 3,5 g 75 %iges Dimethyldistearylammoniumchlorid. Nach 2 Stunden bei 95 °C war die Epoxidzahl praktisch auf 0 zurückgegangen. Es entstand eine bei Zimmertemperatur stark viskose Lösung.

Beispiel 15

Zu einem Gemisch von 74,4 g (0,55 Mol) Trimethylaminlösung und 601 g Wasser werden 95,1 g (0,5 Mol) p-Toluolsulfonsäure + $1H_2O$ portionsweise zugesetzt. Dann gab man 3,5 g Dimethyldistearylammoniumchlorid (75 %ig) und 98,7 (0,5 Mol) 1,2 Epoxydodecan hinzu und rührte 5 Stunden bei 80 °C. Nach 1,7 Stunden war eine klare Lösung entstanden. Zu 300 ml dieser Lösung wurden 200 ml Toluol, 200 ml Cyclohexan und 100 ml Isopropylalkohol gegeben und hiermit am Wasserabscheider entwässert. Man erhielt nach Abdestillieren der Lösungsmittel 81,6 g Rohprodukt, das man aus 85 g Butanon und 3,4 g Wasser dreimal umkristallisierte. Der Schmelzpunkt lag bei 180 bis 181,5 °C, Stickstoffgehalt und OH-Zahl stimmten mit den theoretischen Werten für Trimethyl-β-hydroxydodecylammonium-p-toluolsulfonat praktisch überein.

Beispiel 16

Zu einem Gemisch aus 626,9 g Wasser, 49,0 g (0,55 Mol) Dimethylethanolamin wurden 49,0 g (0,5 Mol) 98 %ige Methansulfonsäure und anschließend 3,5 g Dimethyldistearylammoniumchlorid gegeben. Hierzu fügte man unter Rühren 123,84 g (0,5 Mol) 1,2 Epoxyhexadecan (Epoxidzahl 6,46). Bei 95 °C wurde 14 Stunden lang gerührt. Es entstand eine klare Lösung (Epoxidzahl 0,06).

Der Stickstoffgehalt des dreimal aus Ethylacetat umkristallisierten Produktes (Schmelzpunkt 94 °C) lag bei 3,29 % (theoretischer Wert : 3,25 %).

Beispiel 17

61,15 g (0,55 Mol) Chinuclidin wurden mit 285,05 g Wasser und 49,3 g (0,5 Mol) 37 %iger Salzsäure versetzt. Hierzu fügte man 94,0 g 1,2-Epoxydodecan (0,5 Mol) und 3,5 g Dimethyldistearylammoniumchlorid (75%ig) zu und erhitzte unter Rühren auf 95°C. Nach 15 Minuten war die Epoxidzahl auf 0,035 gesunken. Das Reaktionsprodukt wies 89,8 % der Theorie an Quartärverbindung auf.

## Patentansprüche

1. Verfahren zur Herstellung von quartären Ammoniumverbindungen durch Umsetzen von Epoxidverbindungen mit einem tertiären Amin, dadurch gekennzeichnet, daß man als Epoxidverbindung entweder ein Epoxyalkan der allgemeinen Formel I

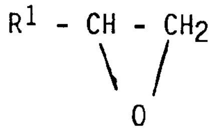
(I)

in der $R^1$ eine lineare oder verzweigte aliphatische Kohlenwasserstoffgruppe mit 4 bis 21 Kohlenstoffatomen oder eine Gruppe der allgemeinen Formel II

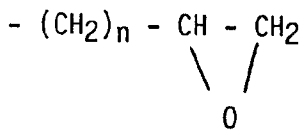
(II)

mit n = 4 bis 16 bedeutet, oder einen Glycidether der allgemeinen Formel III

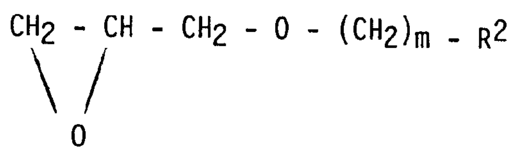
(III)

in der m einen Wert von 1 bis 10 und $R^2$ Wasserstoff oder eine aliphatische Kohlenwasserstoffgruppe mit 1 bis 24 Kohlenstoffatomen oder eine Gruppe der allgemeinen Formel IV

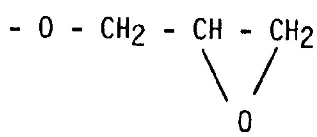
(IV)

bedeutet, mit dem Salz eines tertiären Amins in Gegenwart von quartären Ammoniumverbindungen als Katalysator vornimmt.

2. Verfahren nach Anspruch 1, dadurch gekennzeichnet, daß man in Wasser gelöste Salze eines tertiären Amins einsetzt.

3. Verfahren nach den Ansprüchen 1 und 2, dadurch gekennzeichnet, daß man ein tertiäres Amin in Wasser löst, zu dieser Lösung unter Salzbildung Säure zugibt und dann die so gebildete Aminsalzlösung mit der Epoxidverbindung in Gegenwart von quartären Ammoniumverbindungen als Katalysator umsetzt.

4. Verfahren nach den Ansprüchen 1 bis 3, dadurch gekennzeichnet, daß man die Umsetzung bei Temperaturen zwischen 40 und 100°C, vorzugsweise zwischen 80 und 95°C unter Normaldruck vornimmt.

5. Verfahren nach den Ansprüchen 1 bis 4, dadurch gekennzeichnet, daß man 0,5 bis 10 Gewichtsprozent Katalysator, bezogen auf das Endprodukt, verwendet.

6. Verfahren nach den Ansprüchen 1 bis 5, dadurch gekennzeichnet, daß man auf 1 Epoxidäquivalent 1, vorzugsweise 1,1 Aminäquivalent einsetzt.

7. Verfahren nach den Ansprüchen 1 bis 6, dadurch gekennzeichnet, daß man als Katalysator das Verfahrensprodukt eines vorhergehenden Ansatzes einsetzt.

8. Verfahren nach den Ansprüchen 1 bis 8, dadurch gekennzeichnet, daß manein Epoxyalkan der allgemeinen Formel I, in der $R^1$ eine aliphatische Kohlenwasserstoffgrupe mit 4 bis 16 Kohlenstoffatomen bedeutet, mit dem Salz eines tertiären Amins und einer starken Säure in Gegenwärt von Dimethyldi($C_{12}$- bis $C_{18}$-Alkyl- oder Alkenyl-)ammoniumchlorid als Katalysator umsetzt.

**Claims**

1. A process for the production of quaternary ammonium compounds by reaction of epoxide compounds with a tertiary amine, characterized in that as epoxide compound either an epoxyalkane corresponding to general formula I

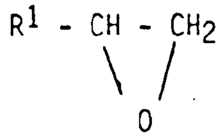

(I)

in which $R^1$ is a linear or branched aliphatic hydrocarbon group containing 4 to 21 carbon atoms or a group corresponding to general formula II

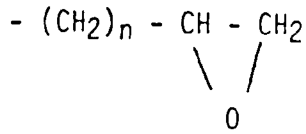

(II)

in which n = 4 to 16, or a glycidyl ether corresponding to general formula III

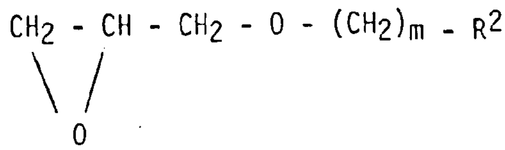

(III)

in which m has a value of 1 to 10 and $R^2$ is hydrogen or an aliphatic hydrocarbon group containing 1 to 24 carbon atoms or a group corresponding to general formula IV

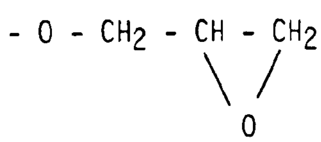

(IV)

is reacted with the salt of a tertiary amine in the presence of quaternary ammonium compounds as catalyst.

2. A process as claimed in Claim 1, characterized in that salts of a tertiary amine dissolved in water are used.

3. A process as claimed in Claims 1 and 2, characterized in that a tertiary amine is dissolved in water, acid is added to the resulting solution with salt formation and the amine salt solution thus formed is then reacted with the epoxide compound in the presence of quaternary ammonium compounds as catalyst.

4. A process as claimed in Claims 1 to 3, chanacterized in that the reaction is serried out under normal pressure at temperatures of from 40 to 100 °C and preferably at temperatures of from 80 to 95 °C.

5. A process as claimed in Claims 1 to 4, characterized in that the catalyst is used in a quantity of from 0.5 to 10 % by weight, based on the end product.

6. A process as claimed in Claims 1 to 5, characterized in that 1 and preferably 1.1 amine equivalent is

used to 1 epoxide equivalent.

7. A process as claimed in Claims 1 to 6, characterized in that the end product of a previous reaction is used as the catalyst.

8. A process as claimed in Claim 1 to 8, characterized in that an epoxyalkane of general formula I, in which $R^1$ is an aliphatic hydrocarbon radical containing from 4 to 16 carbon atoms, is reacted with the salt of a tertiary amine and a strong acid in the presence of dimethyl di-($C_{12}$-$C_{18}$-alkyl or alkenyl)-ammonium chloride as catalyst.

## Revendications

1. Procédé de fabrication de composés d'ammonium quaternaire par réaction de composés époxydiques avec une amine tertiaire, caractérisé en ce que l'on met en oeuvre comme composé époxydique soit un époxyalcane de formule générale (I) :

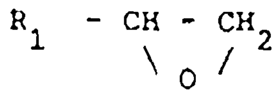
(I)

dans laquelle $R_1$ signifie un radical hydrocarboné linéaire ou ramifié aliphatique ayant de 4 à 21 atomes de carbone, ou un groupe de formule générale (II) :

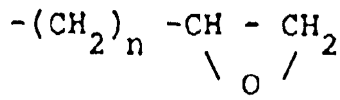
(II)

dans laquelle n = 4 à 16 ou un éther glycidique de formule générale (III) :

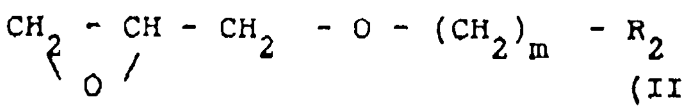
(III)

dans laquelle m signifie une valeur allant de 1 à 10 et $R_2$ signifie de l'hydrogène ou un radical hydrocarboné aliphatique ayant de 1 à 24 atomes de carbone ou un groupe de formule générale (IV) :

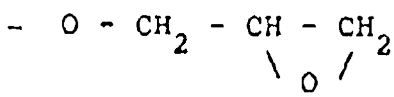
(IV)

avec un sel d'amine tertiaire, en présence de composés d'ammonium quaternaire comme catalyseur.

2. Procédé selon la revendication 1, caractérisé en ce qu'on utilise des sels dissous dans de l'eau d'une amine tertiaire.

3. Procédé selon les revendications 1 et 2, caractérisé en ce qu'on dissout une amine tertiaire dans de l'eau, on ajoute à cette solution un acide avec formation d'un sel, puis on fait réagir la solution de sel d'amine ainsi formée avec le composé époxy en présence de composés d'ammonium quaternaires comme catalyseur.

4. Procédé selon les revendications 1 à 3, caractérisé en ce qu'on exécute la réaction à des températures entre 40 et 100 °C, de préfèrence entre 80 et 95 °C, sous la pression normale.

5. Procédé selon les revendications 1 à 4, caractérisé en ce qu'on utilise 0,5 à 10% en poids de catalyseur par rapport au produit final.

6. Procédé selon les revendications 1 à 5, caractérisé en ce que pour 1 équivalent époxy on utilise 1, de préférence 1,1, équivalent d'amine.

7. Procédé selon les revendications 1 à 6, caractérisé en ce qu'on utilise comme catalyseur le produit du procédé d'une campagne précédente.

8. Procédé selon les revendications 1 à 8, caractérisé en ce qu'on fait réagir un époxyalcane de formule générale I, dans laquelle $R^1$ signifie un groupe hydrocarboné aliphatique ayant 4 à 16 atomes de carbone, avec

le sel d'une amine tertiaire et d'un acide fort en présence de chlorure de diméthyl-di-(alcoyl- ou alcényl en $C_{12}$ à $C_{18}$)-ammonium comme catalyseur.